# EUROPÄISCHE PATENTSCHRIFT

(11) **EP 1 944 135 B1**
(45) Veröffentlichungstag und Bekanntmachung des Hinweises auf die Patenterteilung: **22.07.2009**
(21) Anmeldenummer: 08150144.7
(22) Anmeldetag: 10.01.2008
(51) Int. Cl.: B25G 1/06, B27B 27/08

(54) **Spannwerkzeug mit einem Standfuß**
Clamp tool with a stand
Outil de serrage doté d'un pied de support

(30) Priorität: 12.01.2007 DE 102007001854
(43) Veröffentlichungstag der Anmeldung: 16.07.2008
(73) Patentinhaber: wolfcraft GmbH, 56746 Kempenich (DE)
(72) Erfinder: Degen, Klemens, 56745, Weibern (DE)
(74) Vertreter: Grundmann, Dirk

(56) Entgegenhaltungen:
- WO-A-20/04078422
- AT-B- 385 444
- DE-A1- 19 731 579
- DE-U1-1202004 014 12
- FR-A- 384 375
- US-A- 1 894 010
- US-A- 3 306 604
- US-A- 5 170 682
- US-A- 5 172 896
- US-A- 5 348 276

## Beschreibung

Die Erfindung betrifft ein Spannwerkzeug gemäß Gattungsbegriff des Anspruchs 1.

Ein derartiges Spannwerkzeug ist aus der W02004/078422 bekannt. Die dort beschriebene Spannvorrichtung besitzt einen Standfuß und einen als vertikales Rohr vom Standfuß abragenden Vertikalträger. Der Vertikalträger trägt eine Antriebsvorrichtung mit einem Griff und einer Betätigungshandhabe. Wird die Betätigungshandhabe relativ zum Griff verschwenkt, so verlagert sich eine Gleitschiene relativ zur Antriebseinrichtung. Einhergehend damit wird eine am Ende der Gleitschiene angeordnete bewegliche Spannbacke auf eine der Antriebseinrichtung zugeordnete feste Spannbacke zu verlagert.

Die AT 385444 beschreibt eine Werkstückspannvorrichtung mit einem Handgriff, der auf eine Gewindespindel wirkt.

Die US 3,306,604 beschreibt eine ähnliche Spannvorrichtung, bei der die bewegliche Spannbacke über eine Gewindespindel verlagerbar ist. Auch die FR 384 375 beschreibt eine Spannvorrichtung mit einer festen und beweglichen Spannbacke sowie einem Standfuß. Hier ist die bewegliche Spannbacke zwischen fester Spannbacke und Standfuß angeordnet.

Aus der DE 297 13 095 U1 ist eine Haltevorrichtung für Fangwände oder -netze zur Absturzsicherung vorbekannt, bei der eine Haltevorrichtung eine feste, sich in Horizontalrichtung erstreckende, einem Standfuß zugeordnete Spannbacke aufweist, gegen welche von oben eine bewegliche Spannbacke mittels einer Antriebseinrichtung, die von einem Spindeltrieb gebildet ist, verlagert werden kann.

Aus der DE 197 31579 A1 ist ein Spannwerkzeug mit einer festen Spannbacke bekannt. Die feste Spannbacke sitzt an einem Spannbackenträger, welcher rechtwinkelig von einer Gleitschiene abragt. Auf der Gleitschiene ist ein Antriebsgehäuse verschieblich gelagert. Das Antriebsgehäuse bildet einen zweiten Backenträger aus, der eine der festen Spannbacke gegenüberliegende bewegliche Spannbacke ausbildet. An dem Antriebsgehäuse sitzt ferner ein Griff sowie ein Antriebshebel, der auf den Griff zugeschwenkt werden kann, um die Antriebseinrichtung mitsamt der beweglichen Spannbacke in Richtung auf die feste Spannbacke zu verlagern. Innerhalb des Antriebsgehäuses befindet sich ein Mitnahmeschieber, welcher von einem Wirkarm des Antriebshebels in eine Verkipptstellung zur Gleitschiene gebracht werden kann. Durch weiteres Verlagern der Handhabe gegen den sich an der Gleitschiene verklemmenden Mitnahmeschieber wird das Antriebsgehäuse schrittweise in Richtung auf die feste Spannbacke verlagert. Ein Sperrschieber bewirkt eine Rücktrittssperre, die durch Betätigen eines Lösehebels aufgehoben werden kann.

Der Erfindung liegt die Aufgabe zugrunde, das gattungsgemäße Spannwerkzeug gebrauchsvorteilhaft weiterzubilden.

Gelöst wird die Aufgabe durch ein Spannwerkzeug gemäß Anspruch 1.

Es ist zunächst ein Vertikalträger vorgesehen. Dieser Vertikalträger verbindet die feste Spannbacke mit dem Standfuß. Dem Vertikalträger ist zudem die Antriebseinrichtung zugeordnet. Dies bringt den Vorteil, dass die Antriebseinrichtung unterhalb der festen Spannbacke liegen kann. Von dem Vertikalträger ragt ein Griff ab, mit dem das Spannwerkzeug getragen wird. Der Griff dient aber auch dazu, das Spannwerkzeug festzuhalten. Der Griff wird von einem Betätigungsgriff der Antriebseinrichtung ausgebildet.

Diesem ist ein Antriebshebel zur Verlagerung der beweglichen Spannbacke in Richtung auf die feste Spannbacke benachbart. Durch ein aufeinander folgendes Schwenken des Antriebshebels in Richtung auf den Betätigungsgriff kann die bewegliche Spannbacke schrittweise gegen die feste Spannbacke verlagert werden. Über den Antriebshebel kann auch eine Spannkraft auf ein zwischen den beiden Spannbacken eingespanntes Werkstück übertragen werden. Der Antriebshebel ist derart dem Betätigungsgriff benachbart, dass eine den Betätigungsgriff umfassende Hand mit den Fingern den Antriebshebel umfassen kann. Bevorzugt liegt der Antriebshebel unterhalb des Betätigungsgriffs. Vorzugsweise weist die Antriebseinrichtung auch einen Lösehebel auf. Mit diesem Lösehebel kann die Spannstellung der Spannbacken aufgehoben werden. Der Lösehebel befindet sich bevorzugt unterhalb des Antriebshebels und kann ebenfalls von den Fingern der den Betätigungsriff anfassenden Hand betätigt werden. Er ist in Richtung auf den Betätigungsgriff zu schwenken, um die Spannstellung aufzuheben, d.h. um die bewegliche Spannbacke von der festen Spannbacke zu entfernen. Die feste Spannbacke, der Vertikalträger und der Standfuß können ein Gehäuse, beispielsweise ein Kunststoffgehäuse, ausbilden. Standfuß, Vertikalträger und feste Spannbacke bilden ein U-förmiges Gehäuse aus. Die bewegliche Spannbacke liegt dann zwischen Standfuß und fester Spannbacke und kann entlang des Vertikalträgers verlagert werden. Der Vertikalträger weist einen Vertikalschlitz auf. In der Mitte dieses Vertikalschlitzes befindet sich eine vertikale Gleitschiene. Auf dieser Gleitschiene ist die Antriebseinrichtung angeordnet. Die bewegliche Spannbacke ist fest mit dem die Antriebseinrichtung aufweisenden Antriebsgehäuse verbunden. Der Betätigungsgriff ragt ebenso wie der Antriebshebel und der Lösehebel vom Antriebsgehäuse ab. Die Antriebseinrichtung besitzt vorzugsweise eine Ausgestaltung, wie sie die DE 197 31579 A1 beschreibt. Der Antriebshebel ist ein Schwenkhebel. Er besitzt einen außerhalb des Gehäuses angeordneten, von den Fingern der den Betätigungsgriff umgreifenden Hand verlagerbaren Hebelarm und einen im Gehäuseinneren angeordneten Wirkarm, der mit einem Mitnahmeschieber zusammensitzt. Der Mitnahmeschieber besitzt ein Fenster, durch welches die Gleitschiene ragt. Die Gleitschiene ragt frei durch den Mitnahmeschieber, wenn der Mitnahmeschieber quer zur Gleitschiene ausgerichtet ist. Hierzu dient eine, die Gleitschiene umgebende Druckfeder. Wird mittels des Wirkarms einseitig eine Kraft auf den Mitnahmeschieber aufgebracht, so verkantet er sich mit der Gleitschiene, so dass die auf den Mitnahmeschieber aufgebrachte Kraft im Zuge des Verschwenkens des Antriebshebels eine Linearverlagerung des Antriebsgehäuses auf der Gleitschiene in Richtung auf die feste Spannbacke zur Folge hat. Ein ähnlich dem Mitnahmeschieber ausgebildeter Sperrschieber wird von einer Feder permanent in einer Verkantstellung gehalten und wirkt somit als Rückdrücksperre. Diese Rückdrücksperre kann durch den Lösehebel aufgehoben werden. Der Lösehebel ist ebenfalls zweiarmig ausgebildet und beaufschlagt mit einem um das Antriebsgehäuse hineinragenden Hebel den Sperrschieber, um ihn aus der Verkantstellung zu bringen bzw. gegenüber der Gleitschiene linear zu verlagern. Dies führt zur Abhebung der Rücktrittssperre und zu einer Spaltbeabstandung der beiden Spannbacken, so dass das darin eingespannte Werkstück entnommen werden kann. Die mehrmalige Betätigung des Lösehebels führt zu einer schrittweisen Verlagerung der beweglichen Spannbacke weg von der festen Spannbacke, wobei eine nur kurze und geringfügige Betätigung des Lösehebels ausreicht, um die bewegliche Spannbacke aus der Spannstellung zu lösen, um sie unmittelbar danach wieder in einer Spaltabstandsstellung zur festen Spannbacke an der Gleitschiene zu fixieren. Die Spannbacken können Spannflächen besitzen, die eine weiche Oberfläche aufweisen. Hierzu können die Spannbacken beispielsweise mit einem Weichkunststoff oder einem anderen plastisch oder elastisch verformbaren Material belegt sein, um die Oberflächen der Werkstücke zu schonen. In einer bevorzugten Weiterbildung der Erfindung, die eigenständige Bedeutung besitzt, trägt die zuoberst angeordnete Spannbacke, also insbesondere die feste Spannbacke einen Winkelanschlag, der in verschiedenen Winkelstellungen fixierbar ist. Dieser Winkelanschlag dient der Führung eines Werkzeuges, insbesondere einer Kreis- oder Stichsäge. Auf dem Winkelanschlag kann eine Werkzeugtragplatte geführt sein. Diese Werkzeugtragplatte nimmt das Sägewerkzeug auf. Der Vertikalträger kann eine weitere Anschlagkante ausbilden. Gegen diese Anschlagkante kann das zwischen die beiden Spannbacken eingespannte Werkstück gelegt werden. Diese Anschlagkante definiert die Lage des Werkstückes und damit auch die Lage des Winkelanschlags in Bezug auf die Erstreckungsrichtung des Werkstücks. Es ist eine Klemmschraube vorgesehen, um den Winkelanschlag in den verschiedenen Schwenkstellungen zu fixieren. Das Spannwerkzeug kann als "Sägemobil" oder als "Spannmobil" verwendet werden. Die bevorzugte Anwendung des Spannwerkzeuges findet bei der Paneelverlegung statt. Die Paneelleisten müssen auf die passende Länge abgelängt werden. Dabei müssen die Schnitte nicht nur quer zur Erstreckungsrichtung der Paneele, sondern auch in einem Winkel dazu durchgeführt werden. Die Paneelleiste wird auf die in einer Spaltabstandsstellung zur festen Spannbacke liegenden beweglichen Spannbacke aufgelegt. Die bewegliche Spannbacke ist fest mit dem Antriebsgehäuse verbunden. Letzteres wird auf der Gleitschiene mittels des Sperrschiebers in Position gehalten. Die Antriebseinrichtung kann mit einer Hand betätigt werden. Diese umgreift den Betätigungsgriff und den Antriebshebel, um durch Verschwenken des Antriebshebels die bewegliche Spannbacke in Richtung auf die oben liegende feste Spannbacke zu verlagern. Im Zuge dieser Aufwärtsverlagerung wird die Paneelleiste in Richtung auf die feste Spannbacke verlagert. Die andere Hand des Benutzers kann die Paneelleiste gegen die vom Vertikalträger gebildete Anschlagfläche drücken, so dass die Paneelleiste in der eingespannten Stellung eine definierte Lage besitzt. Die gesamte Vorrichtung kann zusammen mit eingespannter Paneelleiste an einen anderen Ort gebracht werden. Dies erfolgt durch Angriff am Betätigungsgriff. Das Ablängen erfolgt unter Zuhilfenahme des Winkelanschlags.

Ein Ausführungsbeispiel der Erfindung wird nachfolgend anhand beigefügter Zeichnungen erläutert.

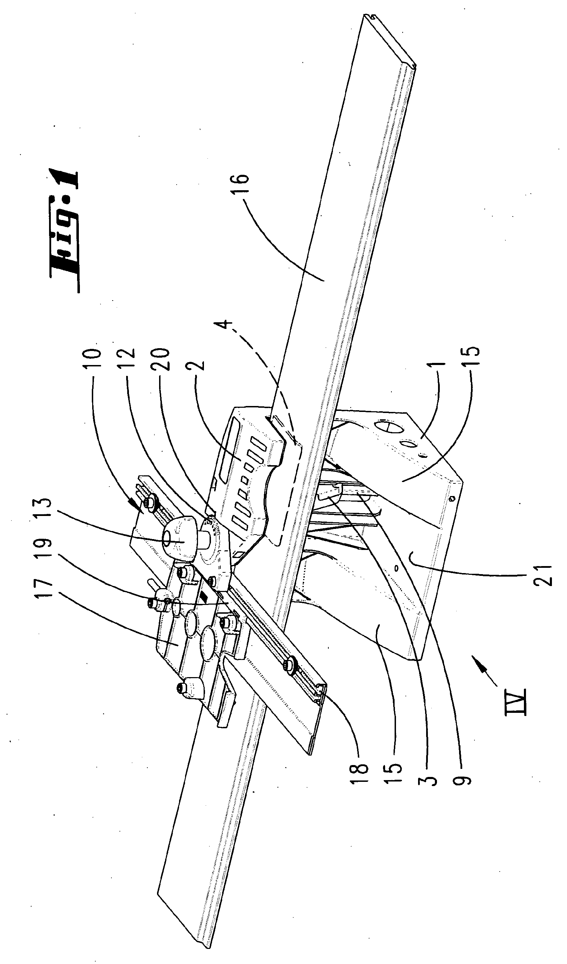

- Fig. 1: Perspektivische Ansicht des Ausführungsbeispiels,
- Fig. 2: das Ausführungsbeispiel in perspektivischer Rückansicht,

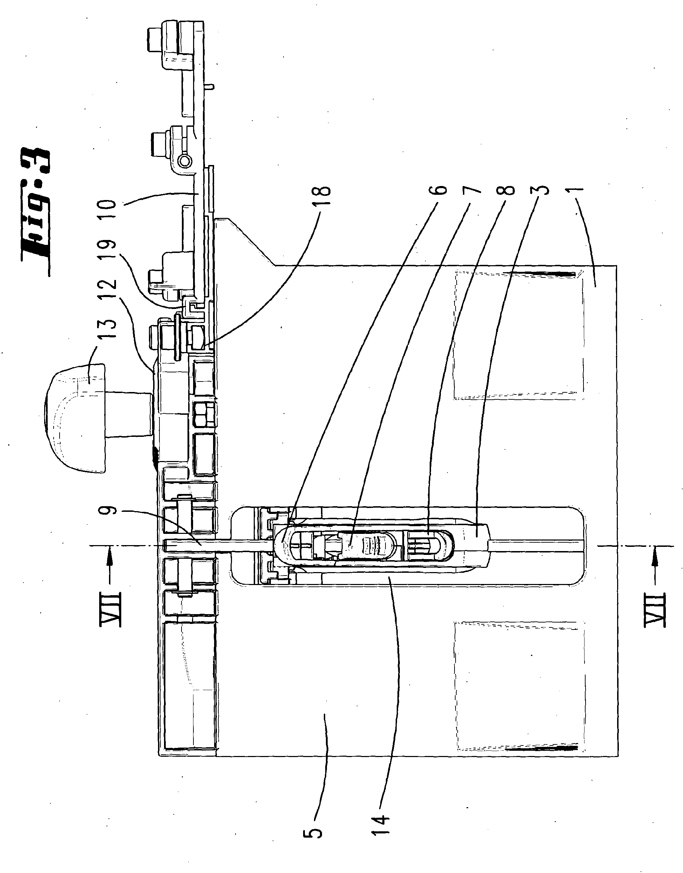

- Fig. 3: die Rückansicht des Ausführungsbeispiels,
- Fig. 4: die Frontansicht des Ausführungsbeispiels,
- Fig. 5: eine Seitenansicht des Ausführungsbeispiels,

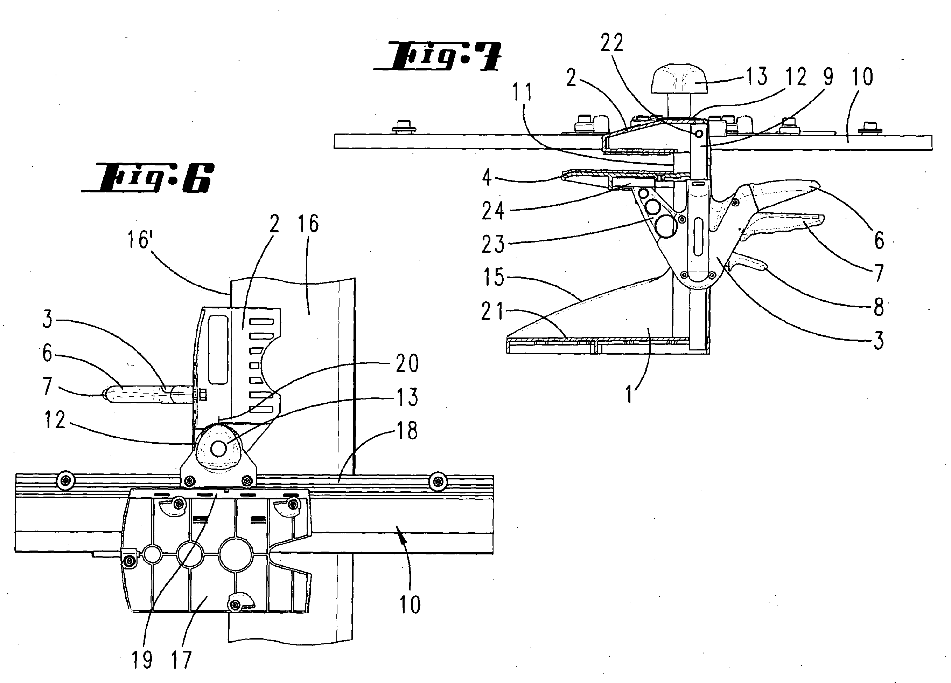

- Fig. 6: eine Draufsicht,
- Fig. 7: ein Schnitt gemäß der Linie VII-VII in Fig. 6,
- Fig. 8: eine Darstellung gemäß Fig. 2 mit verschwenktem Winkelanschlag.

Die in den Zeichnungen dargestellte Vorrichtung ist ein Spannwerkzeug, welches auf einen Fußboden oder eine Tischplatte gestellt werden kann. Das Spannwerkzeug besitzt einen U-förmigen, aus Kunststoff oder Metall gefertigten Grundkörper, der zur Formstabilisierung kastenförmig ausgebildet sein kann. Das Spannwerkzeug besitzt einen Standfuß 1 mit einer im Wesentlichen rechteckigen Standfläche. Der Standfuß 1 bildet einen U-Schenkel des U-förmigen Körpers. Der Standfuß 1 besitzt randseitige Stabilisierungskästen 15. Die Stabilisierungskästen 15 haben eine Keilform, wobei die nach oben weisende Keilfläche geringfügig gewölbt ist. Zwischen den beiden Stabilisierungskästen 15 befindet sich ein Zwischenboden 21.

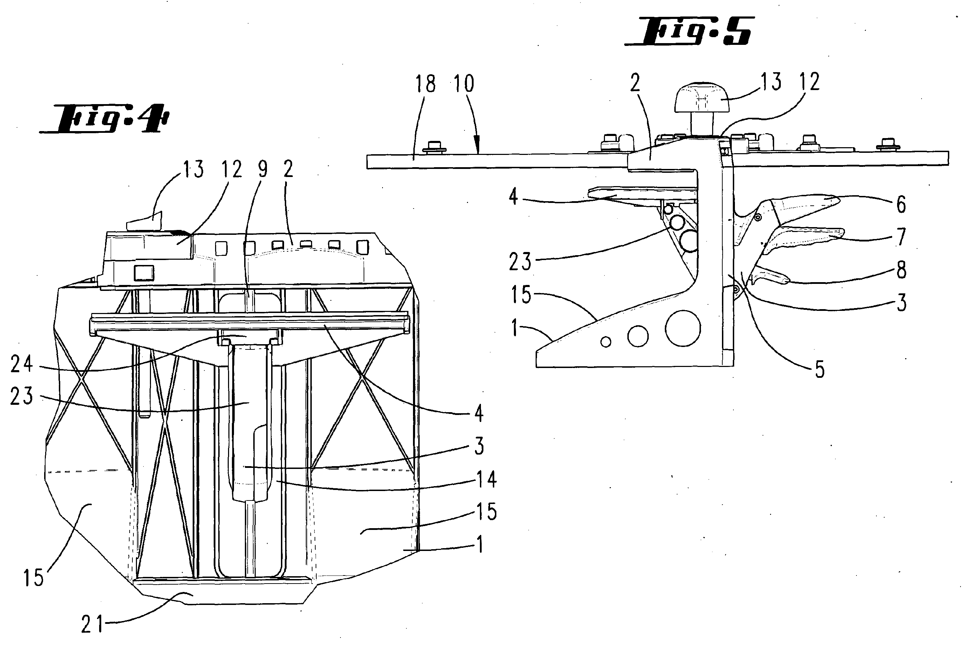

Der U-Steg des U-förmigen Körpers wird von einem Vertikalträger 5 ausgebildet. Der Vertikalträger 5 besitzt ein mittleres, sich in Vertikalrichtung erstreckendes Fenster 14. Der Vertikalträger 5 ist ebenfalls kastenförmig gestaltet. Das Hohlprofil verleiht dem Vertikalträger 5 Stabilität. Im Ausführungsbeispiel ist der Vertikalträger 5 in Richtung des U-Zwischenraumes, also in Richtung auf die Stabilisierungskästen hin offen. Der Figur 4 ist zu entnehmen, dass sich in dieser kastenförmigen Öffnung zwei Diagonalrippen befinden. Diese verlaufen etwa x-förmig und dienen der Stabilitätserhöhung.

Parallel zum Standfuß 1 erstreckt sich in Horizontalrichtung eine feste Spannbacke 2 am oberen Ende des Vertikalträgers 5. An einer Seite der festen Spannbacke 2 ist eine Führungsschienen-Halterung 12 befestigt. Die Führungsschienenhalterung 12 kann um eine Vertikalachse gedreht werden. Die Vertikalachse wird von einer Spannschraube 13 gebildet, mit der der Führungsschienenhalter 12 in seinen verschiedenen Schwenkstellungen gehalten werden kann.

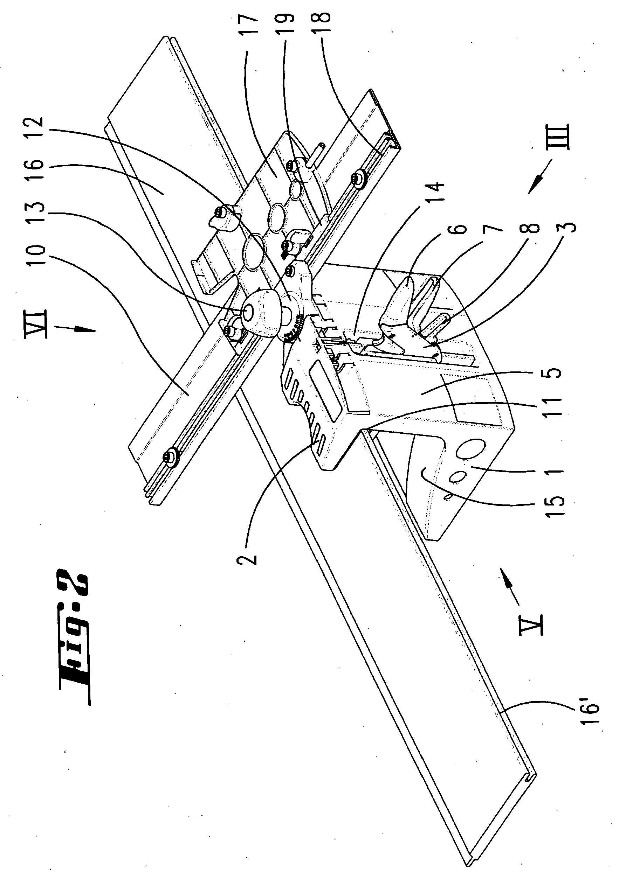

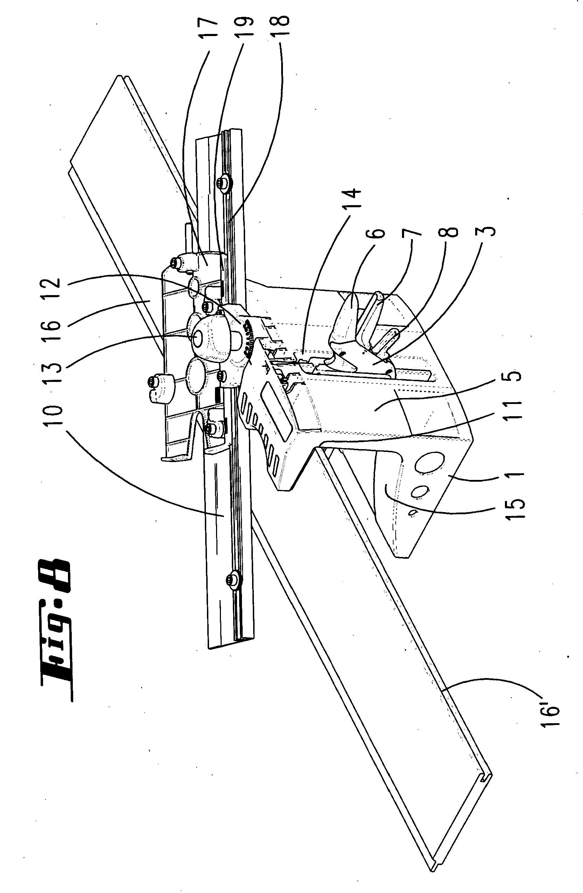

Der Führungsschienenhalter 12 haltert eine Führungsschiene, die einen Winkelanschlag ausbildet. Die Führungsschiene kann aus Aluminium oder einem anderen geeigneten Material gefertigt sein. Die Führungsschiene ist fest mit dem Führungsschienenhalter 12 verbunden, so dass die zusammen mit dem Führungsschienenhalter 12 verschwenkt werden kann. In der Figur 2 besitzt der Winkelanschlag 10 eine 90°-Stellung. In der Figur 8 besitzt der Winkelanschlag eine 45°-Stellung. Die Führungsschiene bildet ein Führungsprofil 18 aus, welches sich in Erstreckungsrichtung der Führungsschiene erstreckt. In dieses Führungsprofil 18 greift ein Führungsprofil 19 eines Werkzeugträgers 17 ein. Auf dem Werkzeugträger 17 kann eine Kreissäge, eine Stichsäge, eine Oberfräse oder ein anderes geeignetes Werkzeug befestigt werden. Der Werkzeugträger 17 ist entlang des Winkelanschlages 10 verschiebbar. Die Unterfläche des den Winkelanschlag 10 ausbildenden Führungsschiene fluchtet mit der Unterfläche der festen Spannbacke 2.

Zwischen Standfuß 1 und fester Spannbacke 2 befindet sich eine bewegliche Spannbacke 4. Diese ist in Vertikalrichtung nach oben auf die feste Spannbacke 2 hin verlagerbar, um ein Werkstück 16 zwischen fester Spannbacke 2 und beweglicher Spannbacke 4 einzuklemmen. Bevorzugt handelt es sich bei dem zwischen den beiden Spannbacken 2 und 4 einzuklemmenden Werkstück um ein Fußbodenpaneel, welches auf die richtige Länge abgelängt werden soll. Dies erfolgt vermittels des oben genannten Werkzeuges, welches auf dem Werkzeugträger 17 befestigt wird. Das Ablängen des Werkstückes 17 erfolgt dann entlang dem Winkelanschlag 10, der zuvor in die richtige Winkelstellung gebracht ist. Die Unterfläche des Winkelanschlages 10 liegt dabei flächig auf der Oberfläche des Werkstückes 16 auf. Die rückwärtige Randkante 16' des Werkstückes 16 liegt dabei an einer Anschlagkante 11 an, die vom Vertikalträger 5 gebildet ist.

Die Verlagerung der beweglichen Spannbacke 4 in Richtung auf die feste Spannbacke 2 bzw. in Richtung weg von der festen Spannbacke 2 erfolgt mittels einer Antriebseinrichtung 3. Bei der Antriebseinrichtung 3 handelt es sich im Wesentlichen um ein Getriebegehäuse einer Einhandspannzwinge, wie sie von der WO 99/04932 A1 beschrieben wird. Eine aus Stahl bestehende Gleitschiene 9 erstreckt sich in vertikaler Richtung durch das Fenster 14. Ein Ende der Gleitschiene 9 ist im Bereich der festen Spannbacke 2 oberhalb des Schmalrandes des Fenster 14 befestigt. Das andere Ende der Gleitschiene 9 ist unterhalb des unteren Schmalrandes des Fensters im Bereich des Standfußes 1 befestigt. Zur Befestigung des oberen Endes der Gleitschiene 9 ist eine Befestigungsschraube oder ein Bolzen 22 vorgesehen, die eine Befestigungsöffnung der Gleitschiene 9 bzw. Befestigungsöffnungen der festen Spannback 2 kreuzt.

Das aus Kunststoff bestehende Getriebegehäuse der Antriebsvorrichtung 3 gleitet auf der Gleitschiene 9. Mit Hilfe eines in der WO 99/ 04932 A1 beschriebenen Schrittschaltgetriebes kann die bewegliche Spannbacke 4, die fest mit dem Antriebsgehäuse der Antriebseinrichtung 3 verbunden ist, in Richtung auf die feste Spannbacke 2 schrittweise verlagert werden. Auf der der beweglichen Spannbacke 4 gegenüber liegenden Seite befindet sich ein Griff 6. Dieser ragt über die Rückwand des Vertikalträgers 5 hinaus und erstreckt sich in die dem Standfuß 1 gegenüber liegende Richtung in Horizontalrichtung. Unterhalb des Griffs 6 befindet sich eine Betätigungshandhabe 7, die mit dem besagten Schrittschaltgetriebe derart zusammenwirkt, dass ein Verschwenken der Betätigungshandhabe 7 in Richtung auf den Griff 6 eine schrittweise Verlagerung der beweglichen Spannbacke 4 in Richtung auf die feste Spannbacke zur Folge hat.

Unterhalb der Betätigungshandhabe 7 befindet sich ein Lösehebel 8. Mit diesem Lösehebel 8 kann das Gesperre des Schrittschaltgetriebes entsperrt werden, so dass die bewegliche Spannbacke 4 aus der Spannstellung verlagert werden kann. Mit dem Lösehebel 8 wird darüber hinaus auch ein Rückverlagerungsgetriebe betätigt, mit dem durch schrittweises Schwenken des Lösehebels 8 die Antriebseinrichtung 3 nach unten verlagert werden kann.

Auf der dem Griff 6 gegenüberliegenden Seite besitzt das Getriebegehäuse einen Arm 23. Der Arm 23 ragt schräg nach oben und trägt an seinem freien Ende einen Backenträger 24. Auf diesem Backenträger 24 ist die im Wesentlichen eine Rechteckform aufweisende bewegliche Spannbacke 4 aufgesteckt. Die Spannfläche der beweglichen Spannbacke 4 verläuft parallel zur Spannfläche der festen Spannbacke 2. Da die bewegliche Spannbacke 4 als Auflager für das Werkstück 16 dient, ist sie breiter als die feste Spannbacke 2 ausgebildet.

Der Griff 7 ist derart ausreichend fest mit der gesamten Vorrichtung verbunden, dass die gesamte Vorrichtung am Griff 6 gehalten von einem Ort zu einem anderen Ort transportiert werde kann. Dies kann mit bereits eingespanntem Werkstück 16 erfolgen. Der Griff 6 ist ferner in einer derart ergonomisch günstigen Position, dass die gesamte Vorrichtung am Griff 6 gehalten werden kann, wenn das Werkstück 16 abgelängt wird. Mit der linken Hand lässt sich die Vorrichtung durch Angriff am Griff 6 fixieren. Die rechte Hand führt das auf dem Werkzeugträger 17 befestigte Werkzeug. Zum Einspannen des Werkstücks zwischen feste Spannbacke und bewegliche Spannbacke 4 wird das Werkstück bevorzugt mit der linken Hand gehalten. Die rechte Hand kann den Griff 6 umfassen und die Betätigungshandhabe 7 verschwenken. Das Werkstück 16 liegt dabei auf der beweglichen Spannbacke 4 auf und wird durch mehrmaliges Verschwenken der Betätigungshandhabe 7 in Richtung auf die feste Spannbacke 2 verlagert, bis es zwischen den beiden Spannbacken 2 und 4 eingespannt ist. Die rückwärtige Kante 17' liegt dabei an der Anschlagkante 11 an, so dass das Werkstück 16 eine definierte Lage in Bezug auf den Winkelanschlag 10 kommt. Nach dem Absägen des Restabschnittes vom Werkstück 16 wird der Lösehebel 8 geschwenkt. Dabei löst sich die Verspannung innerhalb des Schrittschaltgetriebes, so dass sich die bewegliche Spannbacke 4 in eine Spaltstellung gegenüber der festen Spannbacke 2 nach unten verlagert. Das Werkstück 16 kann jetzt entnommen werden. Ein weiteres Werkstück 16 kann zwischen bewegliche Spannbacke 4 und feste Spannbacke 2 eingespannt werden. Da die Position der beweglichen Spannbacke 4 in der geöffneten Spannbackenstellung infolge des gesperrten Schrittschaltgetriebes erhalten bleibt, braucht die Betätigungshandhabe 7 zum erneuten Verspannen eines gleich starken Werkstücks 16 nur ein- oder zweimal in Richtung auf den Griff 6 geschwenkt werden. Eine einmalige Betätigung des Lösehebels 8 reicht dann wieder aus, um die beiden Spannbacken 2, 4 derart voneinander zu entfernen, dass das Werkstück 16 entnommen werden kann.

Während des Werkstückwechsels bleibt die Position des Winkelanschlages 10 erhalten. Es ist somit möglich, ohne Umstellen des Winkelanschlages 10 nacheinander mehrere Werkstücke 16 im gleichen Winkel zu verkürzen.

In der in Fig. 8 dargestellten 45°-Schwenkstellung des Winkelanschlags 10 liegt eine Schmalrandkante der Führungsschiene an einer 45°-Kante 20 der festen Spannbacke 2 an.

Die bewegliche Spannbacke 4 kann sich über die gesamte Länge der festen Spannbacke erstrecken. Die feste Spannbacke 2 kann eine bogenförmige Ausbuchtung aufweisen.

## Patentansprüche

1. Spannwerkzeug mit einem Standfuß (1) zum Aufstellen des Spannwerkzeuges auf einer Horizontalfläche, mit einer vom Standfuß (1) in Vertikalrichtung beabstandeten festen Spannbacke (2) und mit einer in Vertikalrichtung mit Hilfe einer einen Griff (6) und eine dem Griff (6) benachbarten Betätigungshandhabe (7) aufweisenden und auf einer Gleitschiene (9) angeordneten Antriebseinrichtung (3) auf die feste Spannbacke (2) verlagerbaren, beweglichen Spannbacke (4), und mit einem den Standfuss (1) mit der festen Spannbacke (2) verbindenden Vertikalträger (5), dem die Antriebseinrichtung (3) zugeordnet ist, **dadurch gekennzeichnet, dass** der Standfuß (1), der Vertikalträger (5) und die feste Spannbacke (2) unter Ausbildung einer U-Form einander zugeordnet sind, wobei die bewegliche Spannbacke (4) und die fest mit ihr verbundene Antriebseinrichtung (3) zwischen Standfuss (1) und fester Spannbacke (2) angeordnet ist, wobei sich die die Antriebseinrichtung (3) tragende Gleitschiene (9) in vertikaler Richtung durch ein sich in vertikaler Richtung erstreckendes Fenster (14) des Vertikalträgers (5) erstreckt.

2. Spannwerkzeug nach Anspruch 1, **gekennzeichnet durch** einen am Vertikalträger (5) oder bzw. an der Antriebseinrichtung (3) angeordneten Griff (6).

3. Spannwerkzeug nach Anspruch 1, **dadurch gekennzeichnet, dass** die Antriebseinrichtung (3) einen Griff (6) und einen letzteren, benachbarten Antriebshebel (7) aufweist, dessen Schwenkverlagerung in Richtung auf den Griff (6) eine Verlagerung der beweglichen Spannbacke (4) in Richtung auf die feste Spannbacke (2) zur Folge hat.

4. Spannwerkzeug nach einem der vorhergehenden Ansprüche, **dadurch gekennzeichnet, dass** die Antriebseinrichtung (3) ein Schrittschaltgetriebe aufweist.

5. Spannwerkzeug nach einem der vorhergehenden Ansprüche, **gekennzeichnet durch** einen der Antriebseinrichtung (3) zugeordneten Lösehebel (8), **durch** dessen Betätigung eine Spannstellung der beiden Spannbacken (2, 4) lösbar ist.

6. Spannwerkzeug nach Anspruch 5, **dadurch gekennzeichnet, dass** sich die Spannbacken (2, 4) durch Betätigen des Lösehebels (8), insbesondere schrittweise, voneinander entfernen.

7. Spannwerkzeug nach einem der vorhergehenden Ansprüche, **dadurch gekennzeichnet, dass** die Antriebseinrichtung (3) in einem Antriebsgehäuse angeordnet ist, welches an einer Gleitschiene (9) geführt ist.

8. Spannwerkzeug nach einem der vorhergehenden Ansprüche, **gekennzeichnet durch** einen, einer der beiden, insbesondere der festen Spannbacke (2) zugeordneten, in verschiedenen Schwenkstellungen fixierbaren Winkelanschlag (10).

9. Spannwerkzeug nach Anspruch 8, **dadurch gekennzeichnet, dass** der Winkelanschlag (10) eine Führungsschiene für eine Werkzeugtragplatte (17) ausbildet.

10. Spannwerkzeug nach einem der vorhergehenden Ansprüche, **dadurch gekennzeichnet, dass** der Vertikalträger (5) eine Anschlagkante (11) für das zwischen den beiden Spannbacken (2, 4) einzuspannende Werkstück ausbildet.

## Claims

1. Clamping tool comprising a stand (1) for positioning the clamping tool on a horizontal surface, comprising a fixed clamping jaw (2) at a distance from the stand (1) in the vertical direction, and comprising a movable clamping jaw (4), which can be displaced towards the fixed clamping jaw (2) in the vertical direction by a drive means (3), which comprises a grip (6) and an actuation handle (7) adjacent to the grip (6) and is arranged on a slide rail (9), and comprising a vertical support (5) which connects the stand (1) to the fixed clamping jaw (2) and with which the drive means (3) is associated, **characterised in that** the stand (1), the vertical support (5) and the fixed clamping jaw (2) are associated with one another in such a way as to form a U-shape, the movable clamping jaw (4) and the drive means (3) which is rigidly connected thereto being arranged between the stand (1) and the fixed clamping jaw (2), the slide rail (9) which supports the drive means (3) extending in the vertical direction through a window (14), which extends in the vertical direction, of the vertical support (5).

2. Clamping tool according to claim 1, **characterised by** a grip (6) arranged on the vertical support (5) or on the drive means (3) respectively.

3. Clamping tool according to claim 1, **characterised in that** the drive means (3) comprises a grip (6) and a final, adjacent drive lever (7), the rotational displacement of which in the direction towards the handle (6) results in displacement of the movable clamping jaw (4) in the direction towards the fixed clamping jaw (2).

4. Clamping tool according to any one of the preceding claims, **characterised in that** the drive means (3) comprises a stepper drive.

5. Clamping tool according to any one of the preceding claims, **characterised by** a release lever (8) which is associated with the drive means (3) and the actuation of which allows the two clamping jaws (2, 4) to be released from a clamping position.

6. Clamping tool according to claim 5, **characterised in that** the clamping jaws (2, 4) are moved away from one another by actuating the release lever (8), in particular stepwise.

7. Clamping tool according to any one of the preceding claims, **characterised in that** the drive means (3) is arranged in a drive housing which is guided on a slide rail (9).

8. Clamping tool according to any one of the preceding claims, **characterised by** an angle stop (10) which is associated with one of the two clamping jaws, in particular the fixed clamping jaw (2), and can be fixed in various rotational positions.

9. Clamping tool according to claim 8, **characterised in that** the angle stop (10) forms a guide rail for a tool base plate (17).

10. Clamping tool according to any one of the preceding claims, **characterised in that t**he vertical support (5) comprises a stop edge (11) for the tool which is to be clamped between the two clamping jaws (2, 4).

## Revendications

1. Outil de serrage avec un pied de support (1), pour installation de l'outil de serrage sur une surface horizontale, avec une mâchoire de serrage fixe (2), espacée en direction verticale du pied de support (1), et avec une mâchoire de serrage mobile (4), déplaçable en direction verticale sur la mâchoire de serrage fixe (2), à l'aide d'un dispositif d'entraînement (3), présentant une poignée (6) et une manette d'actionnement (7), voisine de la poignée (6), et disposé sur un rail de glissement (9), et avec un support vertical (5), reliant le pied de support (1) à la mâchoire de serrage fixe (2), support vertical auquel est associé le dispositif d'entraînement (3), **caractérisé en ce que** le pied de support (1), le support vertical (5) et la mâchoire de serrage fixe (2) sont associés les uns aux autres en créant une forme en U, la mâchoire de serrage mobile (4) et le dispositif d'entraînement (3) lui étant relié rigidement étant disposés entre le pied de support (1) et la mâchoire de serrage fixe (2), le rail de glissement (9), portant le dispositif d'entraînement (3), s'étendant en direction verticale à travers une fenêtre (14), s'étendant en direction verticale, du support vertical (5).

2. Outil de serrage selon la revendication 1, **caractérisé par** une poignée (6), disposée sur le support vertical (5) ou sur le dispositif d'entraînement (3).

3. Outil de serrage selon la revendication 1, **caractérisé en ce que** le dispositif d'entraînement (3) présente une poignée (6) et un levier d'entraînement (7) voisin de cette dernière, dont le déplacement en pivotement en direction de la poignée (6) a comme conséquence un déplacement de la mâchoire de serrage mobile (4) en direction de la mâchoire de serrage fixe (2).

4. Outil de serrage selon l'une des revendications précédentes, **caractérisé en ce que** le dispositif d'entraînement (3) présente une transmission à manoeuvre graduelle.

5. Outil de serrage selon l'une des revendications précédentes, **caractérisé par** un levier de desserrement (8), associé au dispositif d'entraînement (3), au moyen de l'actionnement duquel une position de serrage des deux mâchoires de serrage (2, 4) est susceptible d'être relâchée.

6. Outil de serrage selon la revendication 5, **caractérisé en ce que** les mâchoires de serrage (2, 4) s'écartent l'une de l'autre, en particulier de manière graduelle, par actionnement du levier de desserrement (8).

7. Outil de serrage selon l'une des revendications précédentes, **caractérisé en ce que** le dispositif d'entraînement (3) est disposé dans un boîtier d'entraînement, guidé sur un rail de glissement (9).

8. Outil de serrage selon l'une des revendications précédentes, **caractérisé par** une butée angulaire (10), associée aux deux mâchoires, en particulier à la mâchoire de serrage fixe (2), susceptible d'être fixée en différentes positions angulaires.

9. Outil de serrage selon la revendication 8, **caractérisé en ce que** la butée angulaire (10) constitue un rail de guidage pour une plaque support d'outil (17).

10. Outil de serrage selon l'une des revendications précédentes, **caractérisé en ce que** le support vertical (5) constitue une arête de butée (11) pour la pièce d'oeuvre à enserrer entre les deux mâchoires de serrage (2, 4).
